# EUROPEAN PATENT APPLICATION

(11) **EP 2 639 208 A1**
(43) Date of publication of application: **18.09.2013**
(21) Application number: 13151583.5
(22) Date of filing: 17.01.2013
(51) Int. Cl.: C04B 28/26

(54) **Composition for realizing thermal insulating coatings for the building sector, in particular skim coats, and skim coats made with the composition**

(30) Priority: 17.01.2012 IT PI20120005
(71) Applicant: Afon Casa S.r.l., 56025 Pontedera (IT)
(72) Inventor: Lanza, Giovannino, 56025 Pontedera (IT)
(74) Representative: Leotta, Antonio

(57) **Abstract**

A compound of materials, mixed according to predetermined amount's ranges, is adapted to the realization of thermal insulation for the construction industry, and in particular of skim coats for walls and masonry in general. The chemical compound, usually dissolved in aqueous solutions ready for use, comprises aggregates, in micronized form or granular materials, binders based on vinyl resins and / or acrylic materials, thickeners and materials adjuvants for applying the same compound on walls of various material and according to different thicknesses which is a function of the degree of thermal insulation desired, such thicknesses being in any case considerably lower than the equivalent thicknesses of insulation currently used in the industry.

## Description

### TECHNICAL FIELD

The present invention concerns a chemical compound for the production of thermal insulation in the building industry, and in particular of skim coats for walls and masonry in general.

The invention also relates to skim coats obtained with the compound.

### STATE OF THE ART

In the building sector is widely spread the use of materials with low thermal conductivity in order to thermally insulate buildings, in their various parts such as the side walls, the flooring, roofing.

The materials most used mainly belong to the family of polyurethane foams, soft or rigid, and are made, depending also on the part of the building to isolate, by panels or from continuous rolls.

They are also used materials mixed directly with concrete and then sprayed onto wall surfaces by means of special equipment, as is the case, for example, of small spheres in polystyrene or similar material, or applied to the surface in the traditional mode, as in the case of inert materials in micronized form or granular form. Both in the case of materials applied in the form of panels or continuous rolls, and in the case of the material directly mixed with concrete, a suitable degree of isolation, in accordance with regulations governing increasingly stringent, is obtained only with non-negligible thickness, of about 7-10 cm, with consequent reduction of the useful space and high total costs.

There is to be added that relatively to the solutions employing polymeric materials in continuous rolls or panels, due to the intrinsic humidity of the walls and the said materials being substantially impermeable to the passage of air and water vapor, it happens that the characteristics of these materials gradually undergo a degradation which impairs not only the thermal insulation of the building but its structural stability, because of the consequent formation of condensate.

### SUMMARY OF THE INVENTION

The main object of the present invention is to propose a chemical compound for the production of thermal insulating coatings in the building industry with high efficiency of thermal insulation in order to, for example, greatly reduce the thickness of coating to be applied on pre-existing walls to make them comply the requirements of today's regulations on the thermal performance of buildings.

Another object of the invention is to propose a premixed product for the construction industry, in particular a skim coat for surfaces, in paste or liquid with high viscosity, which has features of easiness to be applied and which gives high thermal insulation to the treated surface.

Further object is to propose a chemical compound for the preparation of paints for the building sector providing insulating properties from the thermal point of view.

Another object of the present invention is to propose skim coats for the building sector with high thermal insulating efficiency and also having excellent mechanical strength and resistance to wear.

Another purpose is to propose a chemical compound for the preparation of products for the building sector, in particular skim coats and paints, that, for the same water vapor permeability with respect to products for the building of the known technique, ensures improved thermal insulation capacity.

The above objects and others are achieved by means of a chemical compound consisting of:
- silica based aggregates including kaolin, airgel in spheres of diameter less than 1 mm and expanded siliceous minerals,
- binders comprising potassium silicates and synthetic resins selected from vinyl, acrylic, versatic, siloxane, epoxy or their compounds;
- thickening agents;
- water;
- antifermentative agents;
wherein aggregates amount for 5% to 50% by weight, preferably for 10% to 20% by weight of the compound, binders account for 5% to 60% by weight, preferably for 15% to 30% by weight of the compound, thickening agents account for 0,2% to 9% by weight, preferably for 1% to 3% by weight of the compound; and wherein said potassium silicates account for at least 50% by weight of said binders.

The product advantageously comprises caustic soda and / or ammonia said caustic soda and / or ammonia accounting for 0,02% to 3% by weight, preferably for 0,5% to 1,5% by weight of compound.

Aggregates advantageously also comprise: powder of diatomaceous earth accounting for 10% to 60% by weight of said inert materials; and at least one selected from expanded perlite accounting for 0% to 40%, expanded silica accounting for 0% to 70%, and cork accounting for 0% to 10% by weight of said inert materials.

The abundant presence of potassium silicate in the compound of the invention allows to obtain a final structure of the insulating layer with high breathability, a structure that is highly permeable to water vapor which tends to favor the escape of moisture present in the masonry. The other binders, consisting of one or more types of synthetic resins are preferably selected among those with characteristics of impermeability to water and permeability to water vapour.
The use of diatomaceous earth as a main inert material allows to obtain a very homogeneous product with exceptional characteristics of easiness to apply, so it can be used as a painting, and at the same time guarantees extremely high quality of thermal insulation.

### DESCRIPTION OF PREFERRED EMBODIMENTS

For a better understanding of the advantages and characteristics of the present invention, it will be described below, by way of not limiting example, some embodiments of the same.

### Example 1

### Chemical compound for the production of thermal skim coats for walls and masonry in general.

A compound of materials suitable for the construction of skim coats for masonry walls and coverings, in which the coefficient of thermal conductivity of the thermal insulation layer obtained is less than 0.01 W / m ° K, comprising:

| | |
|---|---|
| - Diatomaceous earth | 10 Kg |
| - Kaolin | 10 Kg |
| - Silica foam | 15 kg |
| - Expanded perlite granules | 5 Kg |
| - Silica airgel in spheres about 2% of total volume of aggregates | |
| | |
| (Aggregates total) | 40 Kg |
| - Potassium silicate | 20 Kg |
| - Vinyl resin | 5 Kg |
| - drying accelerating resin | 5 Kg |
| | |
| (Binders total) | 30 Kg |
| - Starch | 1 Kg |
| - Methylcellulose | 0.7 Kg |
| - Acrylic thickener | 0.3 Kg |
| | |
| (Thickeners total) | 2 Kg |
| - Ammonia | 0.2 Kg |
| - antifermentatives | 0.3 Kg |
| - Surfactants | 0,2 Kg |
| - Water | 27.3 Kg |
| | |
| Total compound weight | 100 kg |

The compound of Example 1 can be used advantageously to achieve skim coats of variable thickness on masonry. As a function of the thickness of skim coat to be realized the aggregates of the compound can be suitably selected. In the case that it is necessary to obtain very thin layers, from 1 to 3-4 mm, they can be used expanded siliceous minerals in fine or very fine grains, even micronized, and also powdered cork, in order to reduce the specific weight of the compound. Additionally, the cork, thanks to its alveolar structure, has both high insulating and sound absorbing characteristics. In this case, the maximum grain size of the aggregates used does not exceed 2 mm. In the case that it is necessary to apply a thick layer of compost you can and should use coarser-grained aggregates, such as cork, expanded perlite, expanded siliceous granular or other minerals in coarse sand or gravel, having a size of the order of millimeters. In this case there are aggregates of average particle size between 2 mm and 5 mm.

For example, it is possible to use inert materials of given grain size for forming a first insulating layer, directly in contact with the wall surface to be protected, and to use inert materials with a smaller grain size to achieve an outermost second insulating layer. The first insulating layer of high thickness guarantees the sufficient thermal insulation, while the second layer, in addition to also contribute to obtaining the proper thermal insulation of the wall, has surface features of a finishing skim coat, then these can be directly painted. This has the advantage of speeding up the time of completion of the thermal insulation desired, since we obtain an outer surface duly finished, ready for final painting and, at the same time, a reduction of the processing steps, with a lower total number of layers of the compound, thanks to the specific structure of the underlying layer, in order to achieve the useful thickness obtaining the desired degree of isolation.

The advantages related to savings of time of completion of thermally insulating coatings with the compound of the present invention are also related to its physical-mechanical characteristics of viscosity and adhesiveness. The compound of the invention is in fact in the form of paste or liquid with a high density and have high qualities of plasticity that facilitate the application and adhesion to masonry surfaces, or even to metal, wood or other material. The above qualities are mainly due to the presence of diatomaceous earth, which has an extremely low particle size, low thermal conductivity and a high absorbing power, combined in appropriate quantitative ratio to starch and cellulose ethers. Diatoms are unicellular algae, characterized by an elaborate silica exoskeleton. The use of diatoms occurs in the form of diatomaceous earth, amorphous silica of organic origin coming from the skeletons of diatoms. The diameter of the diatoms varies from less than 4 microns to about 50-60 microns. Together, in appropriate proportions, starch, and the cellulose ethers, such as methylcellulose, give rise to a mixture extremely plastic, adhesive and easy to apply.

The kaolin, sedimentary rock mainly consisting of kaolinite, is an aluminum silicate. The kaolin gives a skim coat made with the mixture described above high thermal qualities of refractoriness and also helps to make the mixture creamy, smooth and easy to apply, qualities that are particularly appreciated in application of thinner layers such as finishing skim coats or paints insulation. Airgel, in solid spheres with a diameter of less than one millimeter, is a building material extremely light as it is composed of 99.8% of air and is the best known thermal insulating material with a thermal conductivity of up to 0,004 W / mK. The airgel, in solid spheres of diameter less than one millimeter, in particular silica airgel or silica based airgel, which is present in the mixture in percentages from 0.5% to 10% in volume, allows a drastic increase of the thermal insulation. The airgel in spheres is perfectly blended to the other inert materials of the mixture, in particular thanks to the presence of diatomaceous earth and kaolin and the use of the described binders and thickeners. Additional siliceous aggregates used in the compound of the present invention can be expanded perlite, in granular or micronized form, expanded silica, in granular or micronized form, vermiculite, superlite, basaltic flours or sands, bentonite or other still.

The potassium silicate, particularly suitable for outdoor applications as it has better characteristics of resistance to weathering compared to synthetic resins, ensures an excellent breathability of the thermally insulating layers obtained with the compound of the invention.
The binders in synthetic resins, always in lower amount than potassium silicate in order to not to reduce the breathability and stability under the influence of external agents, can be of various kinds selected among those with the best qualities of permeability to water vapor, in function of the characteristics of stickiness, water impermeability, consolidating capacity and other physical-mechanical properties that can be from time to time the most suitable to give to the compound. In particular may be present acrylic, vinyl, polyvinyl, versatic, siloxane, epoxy, acrylic hardening accelerators, and more.

The methyl cellulose, and starch, or other cellulose derivatives starches, are useful as thickeners since they are highly hydrophilic. To these may be added other thickeners such as acrylic resin or other synthetic resins with thickening properties.

The addition of surfactant allows the mixture to entrain air assuming a structure more "spongy", with considerable benefit on the thermal insulation properties.

The ammonia, which possibly may be added or replaced by caustic soda, has the function of facilitating the dissolution of the various components, ensuring a perfect homogenization of the same and therefore the uniformity of the compound.

Antifermentatives and protective substances are important to ensure the stability with time of the compound which, appearing in the form of paste or liquid (therefore in the presence of water), and having dissolved organic substances in it, may gradually deteriorate and lose its own aesthetic and physical-mechanical characteristics.

### Example 2

### Chemical compound for the preparation of paints for the building sector.

A compound of materials suitable for making paints with heat-insulating property for the building sector, includes:

| | |
|---|---|
| - Diatomaceous earth | 1 Kg |
| - Kaolin | 0.5 Kg |
| - Airgel in spheres diameter <250 microns about 2% of the total volume of aggregates | |
| - Potassium silicate | 1.5 Kg |
| - Acrylic resin | 0.7 Kg |
| - Self-polymerizing resin | 0,3 Kg |
| - Starch | 0.1 Kg |
| - Methylcellulose | 0.05 kg |
| - protective substance | 0,05 Kg |
| - antifermentatives | 0.3 Kg |
| - Pigments | 0,2 Kg |
| - Water | 5.4 kg |
| Total compound weight | 10,0 Kg |

The compound of Example 2 has the thermal conductivity of the same order of magnitude as that of Example 1 and yet, due to the lower viscosity and particularly fine particle size, is perfectly suited to be used as a wall paint. Indeed, the aggregates used in Example 2 have maximum grain size of 250 microns.

In example 2 to the compound are added pigments such as titanium dioxide (white), or other mineral oxides, to give the compound, which can be used as a mural painting, the desired color. Moreover, as already pointed out, the kaolin addition to making the paint more opaque and more velvety, smooth and easy to apply, makes the compound less permeable to water and helps to increase the white point.

As already specified above, suitably selected compounds according to the present invention, can be advantageously used in combination to achieve thermal insulating coatings on masonry in order to have significant advantages in reducing the realization times of the coatings themselves.

Indeed, thanks to the possibility of making the compounds according to the invention which incorporate aggregates with very different grain sizes, it is possible to reduce the total number of layers to achieve the desired thermal insulation.

For example, in the case that it is necessary and sufficient to achieve, with the compound of the invention having high efficiency of thermal insulation, an insulating coating of 7 mm thickness on a given wall in masonry, is sufficient to apply a first layer of about 5 mm of a compound according to the invention comprising aggregates of average particle size between 2 mm and 5 mm, and then to apply a further layer of about 2 mm of a compound according to the present invention comprising aggregates with a maximum grain size of approximately 1 mm, and finally to apply a layer of paint made with a compound according to the invention comprising aggregates with a maximum grain size of 250 microns.

Obviously, a thermal insulation coating according to the present invention can also be obtained by applying on a masonry wall a single layer of a chemical compound of the present invention. Certainly, the compound of the invention and insulating coatings for masonry can be obtained with mixtures also very different from those given above by way of example, always remaining within the ambit of protection offered by the following claims.

## Claims

1. Chemical compound for making thermal insulating plasters, in particular for masonry walls, **characterized in that** it comprises:
- silica based aggregates including kaolin, airgel in spheres of diameter less than 1 mm and expanded siliceous minerals,
- binders comprising potassium silicates and synthetic resins selected from vinyl, acrylic, versatic, siloxane, epoxy or their compounds;
- thickening agents;
- water;
- antifermentative agents;
wherein aggregates amount for 5% to 50% by weight, preferably for 10% to 20% by weight of the compound, binders account for 5% to 60% by weight, preferably for 15% to 30% by weight of the compound, thickening agents account for 0,2% to 9% by weight, preferably for 1% to 3% by weight of the compound; and wherein said potassium silicates account for at least 50% by weight of said binders.

2. Chemical compound for making thermal insulating plasters according to claim 1 **characterized in that** it comprises caustic soda and / or ammonia said caustic soda and / or ammonia accounting for 0,02% to 3% by weight, preferably for 0,5% to 1,5% by weight of compound.

3. Chemical compound for making thermal insulating plasters according to claim 1 or 2 **characterized in that** said kaolin accounts for 10% to 60% by weight of inert materials and airgel accounts for 0,25% to 20%, preferably for 0,3% to 3% by volume of said inert materials

4. Chemical compound for making thermal insulating plasters according to any preceding claim **characterized in that** said aggregates also comprise: powder of diatomaceous earth accounting for 10% to 60% by weight of said inert materials; and at least one selected from expanded perlite accounting for 0% to 40%, expanded silica accounting for 0% to 70%, and cork accounting for 0% to 10% by weight of said inert materials.

5. Chemical compound for making thermal insulating plasters according to any preceding claim **characterized in that** said thickening agents comprise starch, cellulose ethers, acrylic thickeners and stearates, the starch accounting for 25% to 75%, the cellulose ethers accounting for 10% to 50%, the acrylic thickeners accounting for 0% to 20%, the stearates accounting for 0% to 30% by weight of thickening agents.

6. Chemical compound for making thermal insulating plasters according to any preceding claim **characterized in that** said antifermentative agents account for 0,02 to 0,2% by weight of compound.

7. Chemical compound for making thermal insulating plasters according to any preceding claim **characterized in that** said chemical compound comprises surfactants.

8. Thermal insulating coating for masonry works made of at least a layer of plaster **characterized in that** it is obtained by applying a layer of a chemical compound according to any preceding claim on a masonry work.

9. Thermal insulating coating for masonry works according to the previous claim **characterized in that** it comprises a first plaster layer obtained from said chemical compound in which the aggregates comprise at least a granular material having average particle size between 2 mm and 5 mm, a second plaster layer obtained from said chemical compound in which the maximum particle size of the aggregates is between 1 mm and 2 mm, and a paint layer obtained from said chemical compound in which the maximum particle size of the aggregates is not greater than 250 micron.
